Europäisches Patentamt

European Patent Office

Office européen des brevets

(11) Publication number: **0 388 931**
**A2**

# EUROPEAN PATENT APPLICATION

(21) Application number: **90105361.1**

(22) Date of filing: **21.03.90**

(51) Int. Cl.⁵: **B05D 5/06, B05D 7/16, B05D 1/36, //(C09D5/29,5:38)**

(30) Priority: **22.03.89 US 327200**

(43) Date of publication of application:
**26.09.90 Bulletin 90/39**

(84) Designated Contracting States:
**BE DE ES FR GB IT NL SE**

(71) Applicant: **BASF CORPORATION**
**1419 Biddle Avenue**
**Wyandotte, Michigan(US)**

(72) Inventor: **Panush, Sol**
**28670 Oak Crest Drive**
**Farmington Hills, Michigan 48018(US)**
Inventor: **Gelmini, James M.**
**32453 Revere**
**Warren, Michigan 48092(US)**

(74) Representative: **Baillie, Iain Cameron et al**
**c/o Ladas & Parry Isartorplatz 5**
**D-8000 München 2(DE)**

(54) Coating system with metallic basecoat exhibiting dichromatic hue shift effects.

(57) The present invention provides a multi-layer coating system comprising a pigmented base coat containing metallic flake, an overlying layer of pigmented transparent coat, and a layer of transparent non-pigmented protective coat, the multi-layer coating system exhibiting dichromatic color travel effects.

The layer of a metallic primary base coat comprises a polymeric binder, metallic flake, and a base coat pigment. The overlying layer of pigmented transparent intermediate coat comprises a polymeric binder and a pigment comprising an organic pigment. In this transparent intermediate coat, the color of the organic pigment is complementary to the color of the pigment in the metallic primary basecoat layer. A layer of non-pigmented transparent protective polymeric clear coat overlies the transparent intermediary coat.

EP 0 388 931 A2

# COATING SYSTEM WITH METALLIC BASECOAT EXHIBITING DICHROMATIC HUE SHIFT EFFECTS

This invention relates to multi-layer coating systems. More particularly, this invention concerns a multi-layer coating system which exhibits dichromatic hue shift effects, to a method of applying such coating systems, and to the resultant coated articles.

Multi-coat coating systems are well known in the coatings industry for coating a variety of substrates ranging from wood, plastics, composites and metal. United States Patent 3,639,147 describes such a system for use in coating motor vehicles. Multi-coat coating systems provide metallic substrates with both the requisite protection from corrosion and marring and with pleasing decorative qualities. Those two functions of coating systems ar particularly important in the automobile industry where the underlying metal substrate is subjected to rigorous environmental conditions and where the appearance of the finished article is one of the most important selling features. Advances in electrocoating primer coatings have vastly improved the corrosion resistance of automobiles, while similar advances in finish coatings have provided striking new color effects and improved weather, sun, and mar resistance.

Recent years have seen the introduction of metallic, pearlescent and opalescent color effects in finish coatings for automobiles. Metallic effects, in which the appearance of sparkle is imparted to finish coatings, are achieved by the introduction into one or more layers of the finish coating of finely divided metallic flake or mica particles. Typical systems of this type are disclosed in United States patents 4,048,136; 4,499,143; and 4,605,687. Pearlescent or opalescent color effects are achieved by introducing into one or more layers of the finish coating of particles of mica which have been previously encapsulated in a thin layer of a metal oxide such as iron oxide or titanium dioxide. Typical systems of this type are disclosed in United States Patents 4,539,258; 4,547,410; 4,551,491; 4,598,015; 4,598,020; and 4,615,940.

The variety of rich and lustrous colors which have been made available through these metallic, opalescent and pearlescent finish coatings has whetted the appetite of the automotive consumer public. Accordingly, although multicoat coating systems have been in use for many years in the automotive industry, the art is in constant search of coating systems possessing novel or unique color effects which, at the same time, have the requisite durability, high gloss, and good color maintenance.

## Brief Description of the Drawing Figures

FIGURE 1 is a section through the CIE 1976 (L*, a*,b* color space diagram showing color value (L*) on the vertical axis and hue (a* and b*) on the horizontal axes.

FIGURE 2 is a view of the section of the CIE 1976 (L*,a*,b*) color space diagram of Figure 1 along the L* axis.

## Disclosure of the Invention

In its principal embodiment, the present invention provides a multi-layer coating system comprising a layer of metallic primary base coat, an overlying layer of transparent, non-metallic pigmented intermediate coat, and a transparent unpigmented topcoat. The primary base coat comprises a polymeric binder, metallic flake, and a base coat pigment. The transparent pigmented intermediate coat comprises a polymeric binder and an intermediate coat pigment. The transparent unpigmented topcoat layer comprises a protective polymeric clear coat overlying said transparent intermediary coat. In the multi-layer coating system of the present invention, the color of the base coat pigment is complementary to the color of intermediate coat pigment, resulting in coatings which exhibit dichromatic color travel effects.

In another embodiment, the present invention provides a method of coating substrates with the multi-layer coating system comprising the steps of a) applying to the substrate a layer of a metallic primary base coat composition comprising a polymeric binder, metallic flake pigment, and a base coat pigment; b) forming a film of the base coat composition on the substrate; c) applying over the film of base coat a layer of a transparent, non-metallic pigmented intermediate coat composition comprising an organic pigment; d) forming a film of the intermediate coat composition on the base coat layer; e) applying a layer of transparent unpigmented protective polymeric clear coat composition over the transparent intermediary coat; and f) forming a film of the transparent protective polymeric clear coat on the transparent intermediate coat.

In yet another embodiment, the present invention provides articles coated with the multi-layer coating system of the present invention.

Any substrate material can be coated with the coating system of the present invention, including such materials as glass, ceramics, wood, plastics, and composites, depending upon the drying and/or curing requirements of the particular coating compositions used in the system. However, the coating system of the present invention is particularly adapted for metallic substrates, and specifically, as an automotive paint finish system. The substrate may be bare substrate material or, in the case of metal substrates, may be pretreated to impart corrosion resistance as by phosphatizing, electrocoating, priming or other similar treatment.

Examples of metallic substrates which can be coated with the coating system of the present invention include steel, aluminum, copper, magnesium, alloys thereof, etc. The chemical components of the coating system of this invention can be varied to suit the temperature tolerance of the substrate material. For example, in the case of plastic substrates, the components are constituted for air drying, or for drying at ambient temperature or curing at low temperatures, e.g. 150°F-180°F (65°C-82°C). Alternatively, in the case of metallic substrates and other substrate materials which can tolerate higher temperatures, the components of the present coating system are constituted for curing at higher temperatures eg. over 180°F (82°C).

The base coat material, i.e. the pigmented polymer layer closest to the substrate, comprises any suitable film forming material conventionally used in this art, metallic flake pigment, and a colorant or pigmenting agent. Suitable film forming materials for use in formulating the colored basecoat compositions include acrylics, alkyds, polyurethanes, polyesters and aminoplast resins. Although the base coat can be deposited out of an aqueous carrier, it is preferred to use conventional volatile organic solvents such as aliphatic, cycloaliphatic and aromatic hydrocarbons, esters, ethers, ketones and alcohols including such things as toluene, xylene, butyl acetate, acetone, methyl isobutyl keyone, butyl alcohol, etc. When using volatile organic solvents, although it is not required, it is preferred to include from about 2% to about 50% by weight of a cellulose ester and/or wax (e.g. polyethylene) which facilitates quick release of the volatile organic solvent resulting in improved flow or leveling out of the coating. The cellulose esters used must be compatible with the particular resin systems selected and include such things as cellulose nitrate, cellulose propionate, cellulose butyrate, cellulose acetate butyrate, cellulose acetate propionate, and mixtures thereof. The cellulose esters when used are preferably used in about 5% to about 20% by weight based on film forming solids. The acrylic resins in the base coat may be either thermoplastic (acrylic lacquer systems) or thermosetting. Acrylic lacquers such as are described in U.S. Pat. No. 2,860,110 are one type of film forming composition useful according to this invention in the base coat. The acrylic lacquer compositions typically include homopolymers of methyl methacrylate and copolymers of methyl methacrylate which contain among others, acrylic acid, methacrylic acid, alkyl esters of acrylic acid, alkyl esters of methacrylic acid, vinyl acetate, acrylonitrile, styrene and the like.

when the relative viscosity of the acrylic lacquer polymer is less than about 1.05, the resulting films have poor solvent resistance, durability and mechanical properties. On the other hand, when the relative viscosity is increased above the 1.40 level, paints made from these resins are difficult to spray and, have high coalescing temperatures.

Another type of film forming material useful in forming the base coat of this invention is a combination of a cross-linking agent and a carboxy-hydroxy acrylic copolymer. Monomers that can be copolymerized in the carboxy-hydroxy acrylic copolymer include esters of acrylic and methacrylic acid with alkanols containing 1 to 12 carbon atoms, such as ethyl acrylate, methyl methacrylate butyl acrylate, butyl methacrylate, 2-ethylhexyl acrylate, lauryl methacrylate, benzyl acrylate, cyclohexyl methacrylate, and the like. Additional monomers are acrylonitrile, methacrylonitrile, styrene, vinyl toluene, α-methyl styrene, vinyl acetate, and so forth. These monomers contain one polymerizable ethylenically unsaturated group and are devoid of hydroxyl and carboxylic groups.

The cross-linking agents used in combination with the hydroxy-carboxy copolymers are those compositions which are reactive with hydroxy and/or carboxylic acid groups. Examples of such cross-linking agents are polyisocyanates (typically di-and/or triisocyanates) polyopoxides and aminoplast resins. Particularly preferred cross-linking agents are the aminoplast resins.

The polyisocyanates when reacted with hydroxyl bearing polyester or polyether or acrylic polymers will yield urethane films useful in the process of this invention in both the base coat and topcoat. The isocyanate (-N=C=O) - hydroxyl (-OH) reaction takes place readily at room temperature, so that ambient and low temperature cure is possible.

Among other resins useful in the base coat are those commonly known as alkyd resins which are defined to include fatty acid or oil containing esterification products. The methods for preparing these resins are well known in the art. The preferred alkyd resins useful In this invention are those containing from about 5 to about 65 weight percent of a fatty acid or oil and having an hydroxyl equivalent to carboxy equivalent ratio of from about 1.05 to 1.75. Alkyd resins having less than about 5% fatty compound are classified as the "oil-less" alkyd resins of polyester resins described hereinafter. On the other hand, alkyd resins containing greater than 65% of a fatty compound exhibit poor baking properties, poor chemical resistance and unsatisfactory adhesion to either the base coat or the substrate. When the hydroxyl to carboxy equivalent ratio is less than about 1.05 gelation can result during polymer preparation while resins prepared having a ratio in excess of 1.75 have low molecular weights and therefore poor chemical resistance. These alkyd resins can also be used as the topcoat of this invention. when this is the case it is preferred that the oil or fatty acid portion of the alkyd resin contain a light colored baking oil or fatty acid such as coconut or dehydrated castor oils or fatty acids. Furthermore, when these resins are used as topcoats they can be reacted with various acrylic or ethylenically unsaturated monomers as described above to produce vinyl modified alkyd resins.

Curing of these alkyd resins can be accomplished by blending with any of the previously described cross-linking agents in the same weight ratios as are used with carboxy-hydroxy copolymers.

Included among the various fatty acids and oils useful in preparing these alkyd resins are the fatty acids derived from the following oils: castor, dehydrated castor, coconut, corn, cottonseed, linseed, oticica, perilla, poppyseed, safflower, soybean, tung oil, etc., and the various rosins containing tall oil fatty acids. Useful polyols include the various glycols, such as ethylene glycol, propylene glycol, neopentyl glycol, butylene glycol, 1,4-butanediol, hexylene glycol, 1,6-hexanediol, the polyglycols such as diethylene glycol or triethylene glycol, etc.; the triols such as glycerine, trimethylol ethane trimethylol propane, etc., and other higher functional alcohols such as pentaerythritol, sorbitol, mannitol, and the like. Acids useful in preparing the alkyd resins of this invention include mono-fuctional acids such as rosin acids, benzoic acid, *p-tert*-butyl benzoic acid and CRC like: the polyfunctioal acids such as adipic acid, azelaic acid, sebacic acid, phthalic acid or anhydride, isophthalic acid, terephthalic acid, dimerized and polymerized fatty acids, trimellitic acid, and the like.

Yet another useful base coat is prepared using nonaqueous dispersions such as are described in U.S. Pat. Nos. 3,050,412; 3,198,759; 3,232,903; and 3,255,135. Typically these dispersions are prepared by polymerizing a monomer such as methyl methacrylate in the presence fo a solvent in which polymers derived from the above monomer are insoluble and a precursor which is soluble in the solvent. Nonaqueous dispersions can have a relative solution viscosity as previously defined of about 1.05 to 3.0. Dispersions having a relative solution viscosity in excess of about 3.0 are difficult to spray and have high coalescence temperatures while dispersions with a relative solution viscosity less than about 1.05 have poor chemical resistance, durability and mechanical properties. The monomers useful in preparing the above-dispersed copolymers or hompolymers are those listed previously as useful in forming the carboxyhydroxy acrylic copolymers.

In another instance the base coat film can be produced from resins known as polyesters or "oil-less" alkyd resins. These resins are prepared by condensing nonfatty containing polyols and polyacids. Included among the useful polyacids are isophthalic acid, phthalic acid or anhydride, terephthalic acid, maleic acid or anhydride, fumaric acid, oxalic acid, sebacic acid, azelaic acid, adipic acid, etc. Mono basic aids such as benzoic, *p-tert*-butylbenzoic and the like can also be utilized. Among the polyalcohols are the diols or glycols such as propylene glycol, ethtlene glycol, bytylene glycol, 1,4-butanediol, neopentyl glycol, hexylene glycol, 1,6-hexanediol, and the like; the triols such as trimethylolethane, trimethylolpropane and glycerine and various other higher functional alcohols such as pentaerythritol.

The base coat also includes particles of metallic flake together with one or more coloring or pigmenting agents. The metallic flake which is incorporated into the base coat layer is selected from finely divided aluminum, copper, brass, silver, gold, silver bronze, or similar decorative particulate metals or alloys. The particle size of the flake is generally between about 0.1 μm and about 2.0 μm in thickness and between about 0.5 μm and about 200 μm in diameter. The metallic flake is produced by techniques well known in the trade by ball milling the appropriate metal foil in the presence of a lubricant such as oleic acid. The metallic flake is preferably of the "non-leafing" type to permit uniform distribution of the metal flake throughout the base coat layer and a certain degree of randomization of orientation of the metal flake in the base coat layer upon curing. Preferred materials are the non-leafing grades of aluminum flake of the types manufactured by the Silberline Manufacturing Co., Inc., R.D. 2 Hometown, Tamaqua, PA 18252 under the tradenames Sparkle Silver® 3122-AR, Sparkle Silver® 3141-ST, Sparkle Silver® 3201- ST, Sparkle Silver® 3500, Sparkle Silver® 4000-AR, Sparkle Silver® 5115-AR, Sparkle Silver® 5242-AR, Sparkle Silver® 5245-AR, Sparkle Silver® 5271-AR, Sparkle Silver® 5500, Sparkle Silver® 6246-AR, Sparkle Silver® 7500, Stamford "Q," Extra Fine "N," and Extra Fine "O" A particulrly preferred material is Sparkle Silver® 3130-AR.

The metal flake imparts a degree of specular reflectance to the base coat layer which varies with the angle of orientation of the individual metal flake to the line of sight of the viewer. The weight ratio of metal flake to colorant incorporated into the pigment of the base coat layer may vary between about 1 part metal flake to 99 parts colorant to 99 parts metal flake to 1 part colorant, with lower amounts metal flake required for use with the better hiding, inorganic pigmenting agents. The amount of pigment comprised of the combined metal flake and colorant employed in the base coat layer varies, depending upon the hiding power of the particular colorant employed. Total pigmenting solids in the basecoat will generally range between about 1 percent by weight to about 40 percent by weight, depending upon whether a pigmenting agent of poor or good hiding ability is used. The pigment or coloring agent incorporated into the base coat layer may be any organic or inorganic pigmenting agent known to those skilled in the coatings arts. Organic pigments are preferred because of their higher chromaticity, but in the base coat layer inorganic pigments may be employed, either alone, or in combination with organic pigments to obtain the desired hiding of the substrate. Representative examples of inorganic pigments which may be used in the base coat layer include titanium dioxide, opaque yellow oxide, molybdate orange, opaque red oxide, iron blue, carbon black, and hydrate chrome oxide. Representative examples of organic pigments which may be employed include phthalocyanine green, phthalocyanine blue, anthrapyrimidine yellow, flavanthrone yellow, imidazole orange, quinacridrone red, carbazole dioxazin violet, indanthrene blue, azo browns, isoindolinones, and high molecular weight azo pigments.

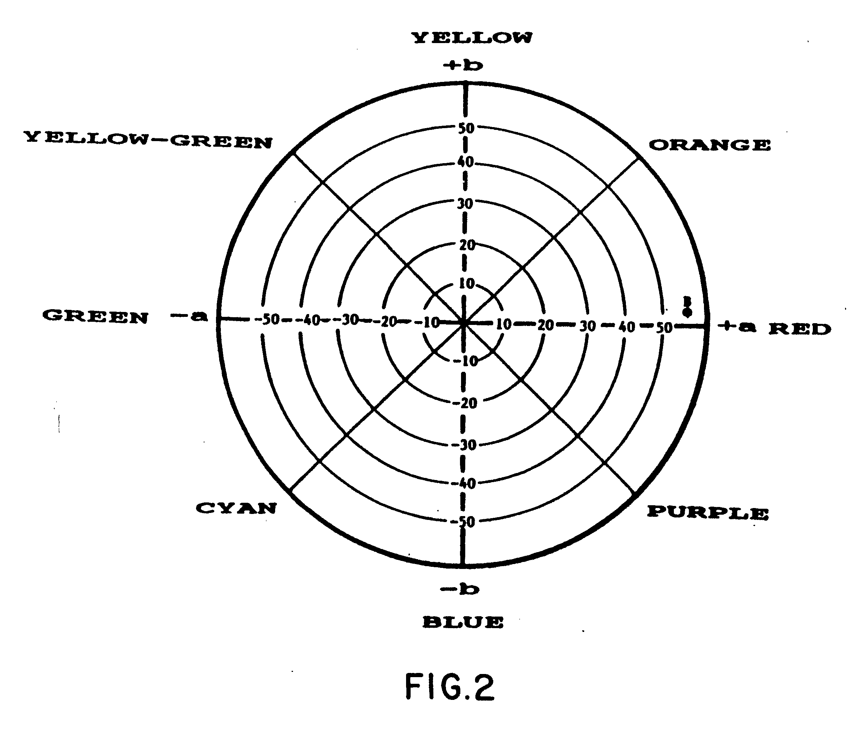

The base coat is the primary color coat which not only provides the basic color, but is also the protective (hiding) enamel. It is carefully chosen for value (degreee or darkness) and hue (undertone color). The color chosen for the base coat is critical insofar as coordination with the pigmenting agent incorporated in subsequently applied coating materials to produce the color travel effects. In particular, the color chosen for the subsequently applied intermediate coat and that chosen for the base coat layer are complementary. By the term "complementary" colors as used throughout this specification and the appended claims is meant colors which lie generally opposite one another on the color wheel such as that depicted in Figure 2. For example, the red shades are complementary to the green shades, yellow shades are complementary to purple shades, and orange shade complementary to blue shades.

The base coat pigmenting agent or colorant is preferably added to the polymer binder in such amounts so as to sufriciently hide of the substrate. The pigment to binder ratio in the base coat composition will vary with the chroma and hiding power or the particular pigment chosen. The base coat can be or any hue as long as it possesses sufficient chromaticity and hiding power. Generally, the amount of pigmenting or coloring agent in the base coat comprises about 1.0% to about 40.0% by weight.

Representative examples of pigments for the colored base coat of the multi-coat system of this invention are presented in Table 1.

Table 1

| Pigment Composition of the Base Coat Layer | | |
|---|---|---|
| Example | Basecoat Color | |
| | Composition | Color Name |
| 1 | C.I. Pigment Yellow 42 (20%) C.I. No. 77492 Sparkle Silver® SS3130 (80%) | Light gold |
| 2 | C.I. Pigment Blue 15:1 (10%) C.I. No. 74160 Sparkle Silver® SS3130 (90%) | Light blue |
| 3 | C.I. Pigment Violet 19 (20%) C.I. No. 46500 Sparkle Silver® SS3130 (80%) | Light red |
| 4 | C.I. Pigment Yellow 42 (80%) C.I. No. 77492 Sparkle Silver® SS3130 (20%) | Bright gold |
| 5 | C.I. Pigment Blue 15:1 (80%) C.I. No. 74160 Sparkle Silver® SS3130 (20%) | Bright blue |
| 6 | C.I. Pigment Violet 19 (80%) C.I. No. 46500 Sparkle Silver® SS3130 (20%) | Bright red |

The base coat is typically applied (air or rotational atomization) in about 0.4 mil to about 2.0 mils in thickness with 0.5 mil to 1.5 mils preferred and 0.7 mil to 0.8 mil optimum.

The metallic, colored base coat is overlayered by a transparent or semi-transparent intermediate interference coat. Any of the above cited polymers may be used as the binder in the transparent interference coat as long as they are substantially clear or transparent. The pigmentation in this coat is produced by incorporation of an organic colorant or pigment. Any organic pigmenting agent known to practitioners of the coatings arts may be employed in this intermediate coating as long as the pigmenting agent or colorant has sufficient transparency. For this reason, organic pigmenting agents are preferred for use in the intermediate or mid-coat layer of the coatings of this invention. Particular examples of pigments useful for the formulation of the intermediate coat include diketopyrrolopyrrole, perylene, quinacridone, phthalocyanine, perinone, quinophthalone, isoindolinone, isoindoline, dioxazine, anthraquinone, thioindigo, methine, azomethine and azo pigments and the metal salts or complexes of methine, azomethine, azo, and phthalocyanine pigments.

This intermediate interference coat is a transparent or semi-transparent layer which modifies the light reflected by the metallic, pigmented base coat layer by allowing penetration of the lightwaves to the base coat where they will be reflected back through the intermediate layer. The resulting interaction of the light scattering and reflection produced by the metallic flake in the base coat layer and the interaction of the complementary colors of the base coat and transparent or semi-transparent intermediate coat produce a perceived color of the multi-layer coating which shifts from the hue of the base coat to that of the intermediate coat with varying angle of view.

The pigment to binder weight ratios (P/B) in this intermediate coating layer are carefully controlled to range between about 0.0025 to about 0.10, preferably from about 0.005 to about 0.05. The pigment to binder ratio must be kept below about 0.10, most preferably at or below about 0.05, depending upon the organic colorant employed, to prevent hiding or masking of the underlying base coat layer by the pigmented intermediate or interference layer. On the other hand the pigment to binder ratios of this intermediate coat must be kept above about 0.0005, preferably above about 0.005, depending upon the organic colorant employed, to achieve the desired color effects in the finished multi-coat system. For example, with lighter hues such as yellow organic pigments, higher amounts of pigment (i.e. P/B ratios of about 0.0005 to 0.10 ) maybe employed, with optimum P/B ratios lying at about 0.005. With pigmenting agents of intermediate hiding power such as benzimidazolone orange, P/B ratios in the intermediate coat layer range between about 0.0005 to about 0.10 with optimum P/B ratios lying at about 0.005. With more highly chromatic colorants having good hiding power (such as carbazole dioxazine purple, the P/B ratios in the interm, ediate coat range between about 0.0005 to about 0.10 with-optimum P/B ratios lying at about 0.001.

Optimum transparency and desired color effects are imparted to this intermediate transparent coating layer at a pigment to binder ratio of about 0.005. Moderate transparency is imparted to the intermediate coating layer, while still retaining the desired final color effects for the multi-coat system, when the pigment to binder ratio in the intermediate coating layer is about 0.05.

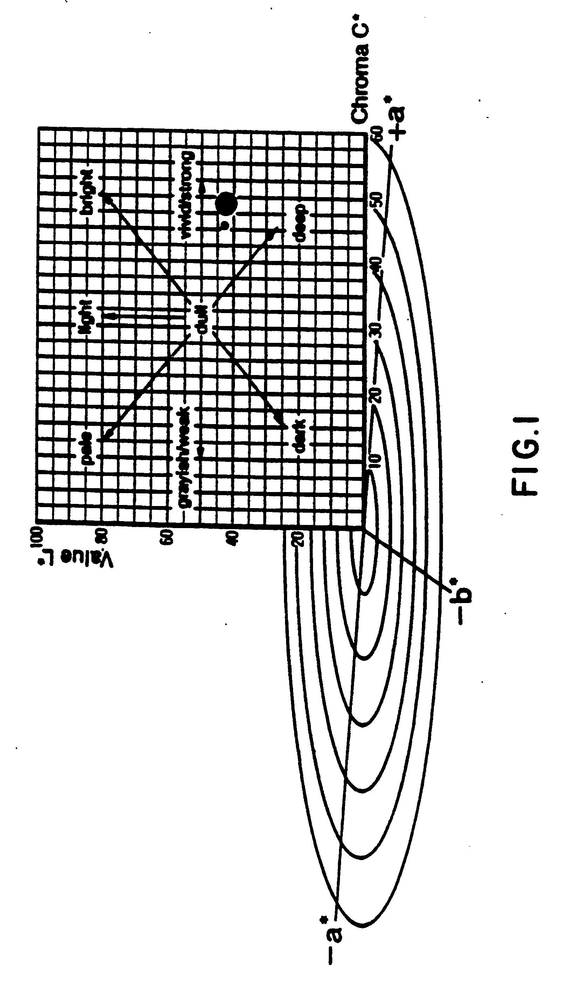

The meanings of the term "complementary color" is made clear by reference to Figures 1 and 2. Referring to Figure 1, there is shown a simplified section through the CIE 1976 (L*, a*, b*) color space diagram based on the color measurement system introduced by Richard S. Hunter, "Photoelectric Tristimulus Colorimetry with Three Filters," National Bureau of Standards Circular 429, United States Government Printing Office, 1942, reprinted in J. Opt. Soc. Am., 32, 509-538 (1942) which is incorporated herein by reference. A particular color can be completely described by defining its value (lightness) hue (color), and chroma (degree of color saturation). In this system the value of a color, L*, corresponds to its lightness and ranges from zero (black) to one hundred (white). The hue of a color is designated by values of a* and b*, with a* corresponding to redness (if a* is positive) or greenness (if a* is negative), and yellowness (if b* is positive) or blueness (if b* is negative). The chroma of the color is designated C* and is equal to the square root of the sum of the squares of a* and b*.

In Figure 1, the value (L*) of a color is measured on the vertical axis, while a* and b* are measured as points on a rectangular coordinate system in the plane horizontal to the L* axis. Chroma (C*) is measured by the perpendicular distance from the L* axis to the ponit fixed by a* and b*. For example, in Figure 1, the color represented by ponit A is shown having a value of L*=44, and a hue represented by a*=45 and b*=10. The chroma, or degree of saturation of this color is thus $(45^2 + 10^2)^{0.5}$ = 46.10.

As can be seen further from Figure 1, the common descriptions of colors can be derived from the value and chroma of a color. For example, colors of a particular hue can be "bright" (high value and chroma), "vivid" (high chroma, medium value), "deep" (low value and high chroma), "dark" (low value and chroma), "weak" (low chroma, medium value), "pale" (high value and low chroma), or "light" (high value, moderate chroma). Colors of intermediate value tend toward grayishness or weakness as their chroma decreases.

Referring to Figure 2, a horizontal section through the CIE 1976 (L*, a*, b*) color space diagram at constant L* is shown. The common names of the colors are shown around the periphery of the graph.

In accordance with the present invention, the color choice for the primary basecoat color determines the preferred color choice for the organic colorant or pigment of the transparent or semi-transparent intermediate color coat. If, for example, point B in Figure 2 represents the color choice for the primary basecoat layer, the color of the organic colorant or pigment of the intermediate color coat is preferably chosen from colors lying in the opposite quadrant, i.e., in the example given, from hues ranging from yellow-green through green to cyan, preferably from a color lying diammetrically opposite on the color wheel represented by Figure 2. For example, using a red basecoat hue represented by point B in Figure 2, the organic colorant or pigment of the intermediate color coat is chosen from hues ranging from orange, through red to purple.

The perception of color is very subjective, and what one observer would call "red" another might call "orange-red." However, as used throughout this specification and appended claims, the color names are defined as follows: red is any transmitted or reflected color of a wavelength of between about 610 and about 700 nanometers; orange is any transmitted or reflected color of between about 590 and about 610 nanometers; yellow is any transmitted or reflected color of between about 570 and about 590 naometers; green is any transmitted or reflected color between about 500 and about 570 nanometers; blue is any transmitted or reflected color of between about 460 and about 500 nanometers; and violet or purple is any transmitted color of between about 400 and about 460 nanometers.

Representative examples of pigments employed in the intermediate coating layer are presented in Table 2.

Table 2

| Pigment Composition of the Intermediate Coating Layer | | | |
|---|---|---|---|
| Example | Intermediate Coat Color | | |
| | Pigment | Color | P/B Ratio |
| 7 | C.I. Pigment Violet 23 C.I. No. 51319 | Light violet | 0.001 |
| 8 | C.I. Pigment Violet 23 C.I. No. 51319 | Medium violet | 0.005 |
| 9 | C.I. Pigment Violet 23 C.I. No. 51319 | Purple | 0.05 |
| 10 | C.I. Pigment Red 170 C.I. No. 12475 | Light orange | 0.005 |
| 11 | C.I. Pigment Red 170 C.I. No. 12475 | Medium orange | 0.05 |
| 12 | C.I. Pigment Red 170 C.I. No. 12475 | Deep orange | 0.10 |
| 13 | C.I. Pigment Green 7 C.I. No. 74260 | Light green | 0.005 |
| 14 | C.I. Pigment Green 7 C.I. No. 74260 | Medium green | 0.05 |
| 15 | C.I. Pigment Green 7 C.I. No. 74260 | Deep green | 0.10 |

Coating systems in accordance with the present invention having various combinations or base coat colors and intermediate coat pigments are presented in Table 3.

Table 3

| Pigment Composition of Multicoat Coatings | | | |
|---|---|---|---|
| Example | Basecoat Color | Intermediate Coat Color | Final Color Effect |
| Red-Green Combinations | | | |
| 16 | Example 3 - Light red | Example 13 - Light green | Kelly Green |
| 17 | Example 3 - Light red | Example 15 - Deep green | Pine green |
| 18 | Example 6 - Bright red | Example 13 - Light green | Dark raisin |
| Orange-Blue Combinations | | | |
| 19 | Example 2 - Light blue | Example 10 - Light orange | Sand |
| 20 | Example 5 - Bright blue | Example 10 - Light orange | Dark gun metal |
| Yellow-Purple Combinations | | | |
| 21 | Example 1 - Light gold | Example 8 - Medium violet | Grape |
| 22 | Example 1 - Light gold | Example 9 - Purple | Rich clean violet |
| 23 | Example 4 - Bright gold | Example 7 - Light violet | Burnt cinnamon |

Goniospectrophotometric measurements were made from selected steel panels which had been coated by the method of the present invention. The measurements were made on a Zeiss Model BLX 111 Goniospectrophotometer using a standard D65 illuminant at illumination angles of 25°, 45°, and 70°. These data are presented in Table 4 and illustrate numerically the hue shifts observed with coatings in accordance with the present invention when viewed from different angles. The Table gives the value (L*),

8

hue (a* and b*), and chroma (C) for three representative multi-layer coating systems of the present invention at different viewing angles. For convenience, a color name has been assigned to each perceived color.

Table 4

| Goniospectrophotometric Measurements | | | |
|---|---|---|---|
| Example | Color Measurement Angle | | |
| | 25° | 45° | 70° |
| **16** | | | |
| L* | 60.451 | 38.377 | 25.932 |
| a* | -39.143 | -21.417 | -11.512 |
| b* | -2.396 | -6.318 | -7.567 |
| C | 39.216 | 38.377 | 25.932 |
| | (Kelly green) | (Gray green) | (Gun metal) |
| 17 L* | 30.497 | 18.560 | 12.221 |
| a* | -68.076 | -44.217 | -28.028 |
| b* | 10.972 | 1.672 | -3.980 |
| C | 68.954 | 44.249 | 28.310 |
| | (Pine green) | (Jade green) | (Spruce green) |
| 18 L* | 23.560 | 16.607 | 13.866 |
| a* | -0.322 | 7.103 | 9.300 |
| b* | -5.737 | -4.866 | -3.324 |
| C | 5.746 | 8.610 | 9.876 |
| | (Dark raisin) | (Dark rust) | (Dark russet) |
| 19 L* | 62.002 | 48.151 | 38.730 |
| a* | 12.313 | 10.695 | 10.865 |
| b* | 18.995 | 20.898 | 22.862 |
| C | 22.637 | 23.476 | 25.313 |
| | (Sand) | (Tangerine) | (Medium camel) |
| 20 L* | 26.030 | 19.004 | 15.397 |
| a* | -6.262 | -0.994 | -9.675 |
| b* | -18.036 | -9.675 | -2.824 |
| C | 19.092 | 9.726 | 4.058 |
| | (Dark gun metal) | (Med.-dark blue) | (Dark amber) |
| 21 L* | 33.710 | 18.698 | 11.684 |
| a* | 47.882 | 29.917 | 19.329 |
| b* | -67.751 | -41.778 | -26.373 |
| C | 82.929 | 51.385 | 32.698 |
| | (Grape) | (Blueberry) | (Violet) |
| 22 L* | 7.346 | 5.303 | 4.884 |
| a* | 26.664 | 11.044 | 5.621 |
| b* | -30.717 | -13.076 | -4.089 |
| C | 40.662 | 17.116 | 6.951 |
| | (Rich violet) | (Dark violet) | (Blackberry) |
| 23 L* | 60.583 | 34.610 | 22.803 |
| a* | 21.168 | 13.460 | 10.766 |
| b* | 23.066 | 16.910 | 14.576 |
| C | 31.307 | 21.613 | 18.121 |
| | (Burnt cinnamon) | (Burnt orange) | (Dark burnt orange) |

The intermediate coating layer is overlayered with a final layer which is also constituted of the same polymers as above recited with the caveat or being totally transparent. This layer preferably contains ultraviolet light stabilizers and/or absorbers (e.g. hindered amines) to absorb and screen out ultraviolet radiation. This transparent clear coat should be applied at about 1.8 mils to 2.3 mils dry film thickness. Optimum dry film is about 1.9 mils to 2.1 mils thick. The clear coat should be applied wet-on-wet over the

9

interference coat.

Utilizing the compositions of the present invention offers a means of combining the desirable properties of a combination of resin systems. For example, in automotive finishes the pigment control properties of acrylic lacquers can be combined with the chemical resistance properties of thermosetting acrylic resins by applying a thermosetting acrylic clear coat over a pigmented thermplastic acrylic lacquer base or interference coat (although acrylic lacquers may be used for all layers). Likewise, in appliance finishes the chemical resistance of polyester resins can be combined with the lower cost of thermosetting actylic resins by applying a polyester clear topcoat over a pigmented thermosetting acrylic base or interference coat. Although any of the above-mentioned thermoplastic materials may be used to form the transparent topcoat, better durability is achieved if the topcoat is one of the above-cited thermosetting materials, i.e. the material containing the cross-linking agents. In all instances where the above methods and compositions are used extremely high gloss films result. In fact, using the process of this invention gloss readings in excess of 100 are readily obtained.

The base coat, intermediate coat and the topcoat can be applied by any conventional methods in this art such as brushing, spraying, dipping, flow coating etc. Typically spray application is used, especially for automotive finishing. Various types of spraying can be utilized such as compressed air spraying, electrostatic spraying, hot spraying techniques, airless spraying techniques etc. The transparent intermediate coat coat is typically applied from about 0.4 mil to about 2.0 mils and preferably about 0.5 mil to about 0.8 mil. This thickness can be applied in a single coating pass or a plurality of passes with very brief drying ("flash") between applications of coats. The application of the coating layers of the present invention generally follow the application to the substrate of a conventional corrosion resistant primer or electrocoat. To this primed substrate is applied the base coat. The base coat is typically applied from about 0.4 mil to about 2.0 mils and preferably about 0.5 mil to about 0.8 mil. This thickness can be applied in a single coating pass or a plurality of passes with very brief drying ("flash") between applications of coats.

Once the base coat has been applied, the transparent interference coats and topcoats are applied after allowing the base coat to flash at ambient temperature for about 30 seconds to about 10 minutes, preferably about one minute to about three minutes. Similar drying delays are allowed between applications of the interference coat and the topcoat. While the respective coats can be dried for longer periods of time, even at higher temperatures, a much improved product is produced by application of the successive coats after only a brief flash ("wet-on-wet). Some drying out of the preceding coat is necessary to prevent total mixing of the respective coats. However, a minimal degree of interaction is desirable for improved bonding or the coatings. The topcoat is applied thicker than the preceding coats (preferably about 1.8 mils to 2.3 mils) and can also be applied in a single or multiple pass.

The term transparent film is defined as film through which the base coat and interference coat can be seen. As stated above it is prefered that the transparent film contain a UV absorbing compound and/or hindered amine UV stablizer and be substantially colorless so that the full polychromatic and aesthertic effect of the base coat-interference coat is not substantially decreased. The outstanding feature of the topcoat is the significant improvement in the durability which is provided to the overall coating. The total dry film thickness for this multi-layered coating system is typically about 3.1 mils to 4.9 mils and preferably about 3.7 mils. Sufficient wetting takes place at the interface of the respective coatings so that no problem with delamination or solvent release from either coating is incured.

Once the successive coats are applied the entire system is again flashed for about 30 seconds to about 10 minutes and the total coatings are then baked at a temperature sufficient to drive off all of the solvent in the case of thermoplastic layers and a temperature sufficient to cure and cross-link in the case of the thermosetting layers. These temperatures can range anywhere from ambient temperature to about $400^\circ$ F $(205^\circ$ C). Typically in the case of thermosetting material temperatures of about $225^\circ$ F. to about $280^\circ$ F.(for example $250^\circ$ F.) are used (e.g. for about 30 minutes).

The compositions and processes according to the present invention provide many improvements over the paint compositions and processes of the prior art. Unique color effects and better hiding of surface defects can be produced. Weather durable color effects are produced not available with other pigment systems while maintaining an appealing and desirable soft, lustrous appearance.

The applied compositions are not moisture sensitive, are less sensitive to criticality of applications, can withstand the elements (i. e. sun exposure), do not operate with subtractive color effects when mixed with other pigments, allow low bake repair color matching, and resist settling and chemical (e.g. acid rain) attack.

It should be noted that while the compositions of the present invention are particularly adapted for original equipment manfacture coatings for automobiles, one of their advantages is the low bake matching use as refinish compositions as well. Whereas in original equipment manufacture the disclosed cellulose esters and/or wax are typically used, such are not universally required, for example, in refinish compositions. Also, where the thermosetting polymer embodiments are preferred in the original equipment manufacture, in refinish either low temperature cure thermosetting materials e.g. 150°F-180°F (66°C-82°C) or ambient temperature cure thermosetting or thermoplastic materials are preferred.

Altrhough this invention has been shown and described with respect to detailed embodiments thereof, it will be understood by those skilled in the art that various changes in form and detail thereof may be made without departing from the spirit and scope of the claimed invention.

**Claims**

1. A multi-layer coating system comprising
A) a layer of metallic primary base coat comprising a polymeric binder, metallic flake, and a base coat pigment;
B) a layer of transparent intermediate coat overlying said primary base coat, comprising a polymeric binder; and an intermediate coat pigment;
C) a layer of transparent protective polymeric clear coat overlying said transparent intermediary coat;
wherein the color of said base coat pigment is complementary to the color of said intermediate coat pigment, said coating system exhibiting dichromatic color travel effects.

2. A multi-layer coating system according to claim 1, characterized by the fact that the base coat pigment is of a red color and the intermediate coat pigment is of a green color, or vice-versa.

3. A multi-layer coating system according to claim 1, characterized by the fact that the base coat pigment is of a blue color and the intermediate coat pigment is of an orange color, or vice-versa.

4. A multi-layer coating system according to claim 1, characterized by the fact that the base coat pigment is of a yellow color and the intermediate coat pigment is of a purple color, or vice-versa.

5. A multi-layer coating system according to any one of the preceding claims, characterized by the fact that the metallic flake of the primary base coat is aluminum.

6. A multi-layer coating system according to any one of the preceding claims, characterized by the fact that the intermediate coat pigment is an organic pigmenting agent selected from the group consisting of diketopyrrolopyrrole, perylene, quinacridone, phthalocyanine, perinone, quinophthalone, isoindolinone, isoindoline, dioxazine, anthraquinone, thioindigo, methine, azomethine and azo pigments and the metal salts or complexes of methine, azomethine, azo, and phthalocyanine pigments.

7. A multi-layer coating system according to any one of the preceding claims, characterized by the fact that the pigment to binder weight ratio in the intermediate coat is between about 0.0005 and 0.10.

8. A multi-layer coating system according to any one of the preceding claims, characterized by the fact that the layer of opaque primary base coat comprises a base coat pigment present in an amount of from about 1 wt.% to about 40 wt.% based on total solids content to the base coat.

9. A method of coating a substrate, particularly a metal substrate, comprising the steps of
a) applying to said substrate a layer of opaque primary base coat composition comprising a polymeric binder, metallic flake, and a base coat pigment;
b) forming a film of said base coat composition on said substrate;
c) applying over said film of base coat a layer of a transparent intermediate coat composition comprising a polymeric binder and an intermediate coat pigment wherein the color of said intermediate coat pigment is complementary to the color of said base coat pigment;
d) forming a film of said intermediate coat composition on said base coat layer;
e) applying a layer of transparent protective polymeric clear coat composition over said transparent intermediary coat; and
f) forming a film of said transparent protective polymeric clear coat on said transparent intermediate coat;
to produce a multi-layer coating exhibiting dichromatic color travel effects.

10. A method according to claim 9, characterized by the fact that the substrate is metal, and the substrate is coated by one or more layers of corrosion protective film prior to the step of applying the layer of non-metallic primary base coat.

11. A method according to claim 10, characterized by the fact that the base coat is of a thickness of between about 0.4 mil and about 2.0 mils, preferably between about 0.7 mil and about 0.8 mil.

12. A method according to claim 10 or 11, characterized by the fact that the layer of transparent intermediate coat is of a thickness of between about 0.4 mil and about 2.0 mils.

13. A method according to any one of claims 10 to 12, characterized by the fact that the layer of protective transparent clear coat is of a thickness of between about 1.8 mils and about 2.3 mils, preferably between about 1.9 mils and about 2.1 mils.

14. An article characterized by the fact that it is coated with a multi-layer coating system according to any one of claims 1 to 9.

FIG.1

EP 0 388 931 A2

FIG.2